(19)

**Europäisches Patentamt**

**European Patent Office**

**Office européen des brevets**

(11) **EP 1 315 324 A1**

(12) **EUROPÄISCHE PATENTANMELDUNG**

(43) Veröffentlichungstag:
  **28.05.2003  Patentblatt 2003/22**

(51) Int Cl.⁷: **H04B 17/00**

(21) Anmeldenummer: **01127757.1**

(22) Anmeldetag: **21.11.2001**

(84) Benannte Vertragsstaaten:
  **AT BE CH CY DE DK ES FI FR GB GR IE IT LI LU
  MC NL PT SE TR**
  Benannte Erstreckungsstaaten:
  **AL LT LV MK RO SI**

(71) Anmelder: **SIEMENS AKTIENGESELLSCHAFT
  80333 München (DE)**

(72) Erfinder:
  • **Breining, Christina, Dr.
    89075 Ulm (DE)**

  • dietrich, Hans, Dr.
    **89075 Ulm (DE)**
  • **Frey, Thomas
    89081 Ulm (DE)**
  • **Schnabl, Gottfried, Dr.
    89077 Ulm (DE)**
  • **Schreyoegg, Christoph, Dr.
    89073 Ulm (DE)**
  • **Schmid, Joachim
    89597 Munderkingen (DE)**

(54) **Verfahren und Anordnung zur Ermittlung und Regelung der Leistung eines digitalen komplexen Teilnehmersignals**

(57)  Die Erfindung betrifft ein Verfahren und eine Anordnung zur Ermittlung und Regelung der Leistung eines digitalen komplexen Teilnehmersignals, das ein reales I-Signal und ein imaginäres Q-Signal aufweist, mit Hilfe eines Leistungskennwerts. Dabei wird der Leistungskennwert mit Hilfe von gemittelten Betragsamplituden des I-Signals und des Q-Signals gebildet, wobei zur Mittelung n Abtastwerte des Teilnehmersignals verwendet werden.

FIG 2

EP 1 315 324 A1

**Beschreibung**

Verfahren und Anordnung zur Ermittlung und Regelung der Leistung eines digitalen komplexen Teilnehmersignals.

Die Erfindung betrifft ein Verfahren und eine Anordnung zur Ermittlung und Regelung der Leistung eines digitalen komplexen Teilnehmersignals, das ein reales I-Signal und ein imaginäres Q-Signal aufweist, mit Hilfe eines Leistungskennwerts.

Bei Funkkommunikationssystemen werden die ermittelten Leistungen von digitalen komplexen Teilnehmersignalen beispielsweise für Algorithmen einer sogenannten physikalischen Schicht benötigt, mit deren Hilfe beispielsweise eine automatische Verstärkungssteuerung (Automatic-Gain-Control, AGC) durchgeführt wird. Oder die ermittelte Leistung wird für eine schnelle Leistungsregelung ("Fast-Power-Control"), für Kanalparameterschätzungen oder für Signaldecodierungen verwendet.

Bei Funkkommunikationssystemen, die beispielsweise nach dem UMTS-FDD-Standard ausgeprägt sind, ist im sogenannten "NodeB Application Part" vorgesehen, die absolute Eingangsleistung eines digitalen Teilnehmersignals in regelmäßigen Abständen zu ermitteln und diese an einen "Radio Network Controler" (RNC) zu übertragen.

Bei bisher verwendeten Verfahren zur Ermittlung der Leistung eines digitalen komplexen Teilnehmersignals, das einen realen I-Signalanteil und einen imaginären Q-Signalanteil aufweist, werden von n Abtastwerten der jeweiligen Signalanteile die abgetasteten n Amplituden des I-Signals quadriert und mit den gleichfalls quadrierten Amplituden des Q-Signals zu einer Summe aufaddiert. Diese Summe wird zur Mittelung der Abtastwerte durch die Anzahl n der Abtastwerte geteilt.

Bedingt durch die Quadrierung der in digitaler Form vorliegenden Amplituden des I-Signals und des Q-Signals entstehen Ergebnisse mit großen Wortlängen bzw. Bitbreiten. Für deren Weiterverarbeitung sind aufwändige Rechen- und Speichereinheiten notwendig.

Es sind Verfahren zur Verringerung von Bitbreiten bekannt, die jedoch bei einer Leistungsermittlung innerhalb des dazu verwendeten Algorithmus zu systematischen Schätzfehlern führen. Besonders bei relativ kleinen Leistungen des empfangenen Teilnehmersignals führt dies zu einem völligen Verschwinden von Ergebniswerten. Durch die Verringerung der Bitbreiten ergeben sich nicht mehr korrigierbare Fehler bei der Leistungsermittlung.

Eine genauere Ermittlung der Leistung eines Teilnehmersignals ist durch eine Erhöhung der Anzahl der Abtastwerte möglich, jedoch vergrößert sich statistisch gesehen die Schätzvarianz der ermittelten Leistung.

Es ist daher die Aufgabe der vorliegenden Erfindung, die Leistung eines digitalen komplexen Teilnehmersignals unter Vermeidung von erhöhtem Speicherbedarf und von aufwändigen Berechnungsalgorithmen genau zu ermitteln und diese zu regeln.

Die Aufgabe der Erfindung wird durch die Merkmale der Ansprüche 1 und 10 gelöst. Vorteilhafte Weiterbildungen sind in den Unteransprüchen angegeben.

Durch die erfindungsgemäße Bildung eines Leistungskennwerts aus gemittelten Amplitudenbeträgen von n Abtastwerten und die weitere Verwendung des Leistungskennwerts zur Leistungsregelung werden aufwändig durchzuführende, quadratische Rechenoperationen, die zu sehr großen Wortlängen bzw. Bitbreiten führen, vermieden.

In einer bevorzugten Ausführungsform des erfindungsgemäßen Verfahrens wird durch die Anwendung einer sogenannten Shift-Right-Operation der ermittelte Leistungskennwert in seiner Bitbreite reduziert.

Durch die erfindungsgemäße Quadrierung des ermittelten Leistungskennwerts und durch die Multiplikation mit einem prozessspezifischen Faktor, ähnlich dem sogenannten Crest-Faktor bei Signalen mit bekannter Kurvenform, wird die Leistung des Teilnehmersignals bei geringen Speicherplatzanforderungen bezüglich ihrer Wortbreite bzw. Bitbreite ermittelt.

Das I-Signal und das Q-Signal werden als Musterfunktionen identischer Prozesse mit gleichen statistischen Eigenschaften und als statistisch voneinander unabhängig angesehen.

Unter der Voraussetzung, dass das I-Signal und das Q-Signal des komplexen Teilnehmersignals beispielsweise gausverteilt sind, ergibt sich für den prozessspezifischen Faktor ein Wert von $\pi/4$. Bei einer anderen bekannten Verteilung wird der prozessspezifische Faktor jeweils entsprechend der Verteilung angepasst.

Das erfindungsgemäße Verfahren kommt besonders vorteilhaft bei einem nach dem UMTS-FDD-Standard ausgeprägten Funkkommunikationssystem zur Anwendung, da hier die Leistung des Teilnehmersignals unabhängig von einer systembedingten Leistungsregelung (AGC) des Teilnehmersignals ermittelt werden muss.

Durch das erfindungsgemäße Regeln der Leistung eines Teilnehmersignals mit Hilfe eines aus dem Leistungskennwert abgeleiteten Normierungsfaktors entfallen vergleichend mit dem Stand der Technik aufwändige Berechnungsalgorithmen zur Wurzelbildung. Bei optimierter Wortlänge wird die Leistung bezüglich der Genauigkeit stets optimal geregelt.

Im Folgenden wird ein Ausführungsbeispiel der vorliegenden Erfindung anhand einer Zeichnung näher erläutert. Dabei zeigt:

FIG 1      ein Signalflussdiagramm zur Ermittlung und Regelung der Leistung eines Teilnehmersignals gemäß dem Stand der Technik, und

FIG 2      ein Signalflussdiagramm zur erfindungsgemäßen Ermittlung und Regelung der Leistung eines Teilnehmersignals.

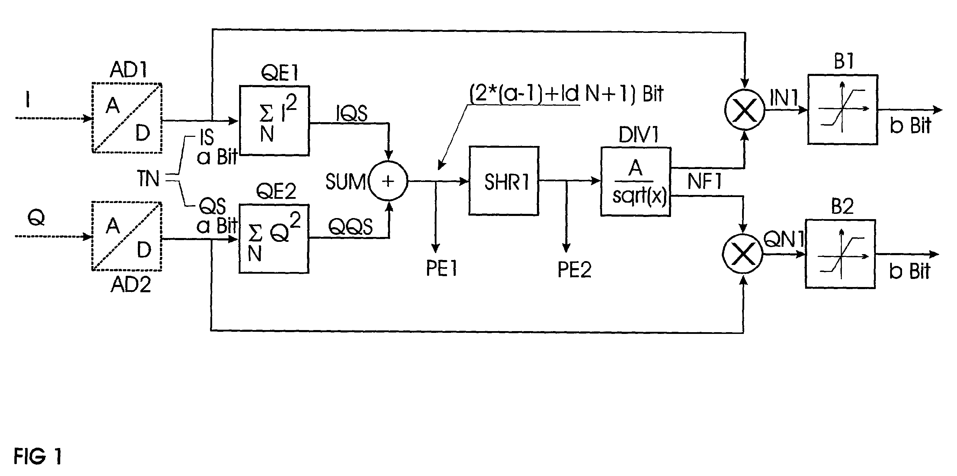

FIG 1 zeigt ein Signalflussdiagramm zur Ermittlung und zur Regelung der Leistung eines Teilnehmersignals TN gemäß dem Stand der Technik.

Ein analoges Teilnehmersignal TN weist als Signalanteile einen realen Signalanteil I und einen imaginären Signalanteil Q auf, die getrennt mit Hilfe eines Analog-Digital-Wandlers AD1 bzw. AD2 gewandelt werden und als digitales I-Signal IS bzw. digitales Q-Signal QS getrennt an jeweils eine ihnen zugeordnete Quadriereinrichtung QE1 bzw. QE2 angeschaltet sind.

Die Quadriereinrichtung QE1 bildet aus durch Abtastung gewonnenen n Amplituden des digitalen I-Signals IS über die n Abtastwerte gemittelte, quadrierte I-Leistungswerte IQS gemäß der Formel:

$$\frac{1}{N}\sum_{n=1}^{N} s_i(n)^2$$

Analog bildet die Quadriereinrichtung QE2 aus durch Abtastung gewonnenen n Amplituden des digitalen Q-Signals QS über die n Abtastwerte gemittelte, quadrierte Q-Leistungswerte QQS gemäß der Formel:

$$\frac{1}{N}\sum_{n=1}^{N} s_q(n)^2$$

Mit Hilfe einer Summiereinrichtung SUM werden die gemittelten I-Leistungswerte IQS und Q-Leistungswerte QQS zu einer ersten mittleren Signalleistung PE1 addiert. Unter der Annahme, dass das digitale I-Signal IS und das digitale Q-Signal QS jeweils eine Bitbreite von a Bit aufweisen, ergibt sich, bedingt durch die quadratischen Rechenoperationen, die erste mittlere Signalleistung PE1 mit einer Bitbreite von 2*(a-1)+ld (N)+1 Bit.

Zusammenfassend ergibt sich eine geschätzte Standardabweichung $\sigma_s^2$ entsprechend dem Erwartungswert E der ersten Signalleistung PE1 gemäß der Formel:

$$\sigma_s^2 = E\left\{\frac{1}{N}\sum_{n=1}^{N} s_i(n)^2 + s_q(n)^2\right\}$$

Die Bitbreite der Leistung PE1 wird mittels einer Shift-Right-Operation durch ein Register SHR1 reduziert, wodurch nach dem Register SHR1 eine allerdings ungenauere mittlere zweite Signalleistung PE2 zur weiteren Verarbeitung zur Verfügung steht, die als Eingangssignal x zu einer Divisionseinrichtung DIV1 gelangt. Mit deren Hilfe wird als genormte Amplitude ein Normierungsfaktor NF1 durch Division eines variierbaren Faktors A mit der Wurzel des Eingangssignals x ermittelt.

Der Normierungsfaktor NF1 wird jeweils mit dem I-Signal IS und mit dem Q-Signal QS multipliziert, wodurch eine indirekte Leistungsregelung des Teilnehmersignals erfolgt. Es entsteht ein reales normiertes Amplitudensignal IN1 und ein imaginäres normiertes Amplitudensignal QN1, die zur weiteren Verarbeitung getrennt an ihnen jeweils zugeordnete Begrenzer B1 bzw. B2 gelangen.

Der Faktor A der Divisionseinrichtung DIV1 wird so variiert, dass der jeweilige Begrenzer B1 bzw. B2 maximal ausgesteuert wird. Die Begrenzer B1 und B2 dienen wieder zur Reduzierung der durch die Rechenoperationen des Divisors DIV1 und der Multiplikatoren systembedingt erfolgten Erhöhung der Bitbreiten der normierten Amplitudensignale IN1 bzw. QN1 auf beispielsweise b Bit. Dadurch werden systembedingt weitere Ungenauigkeiten bei den normierten Amplitudensignalen IN1 bzw. QN1 erzeugt.

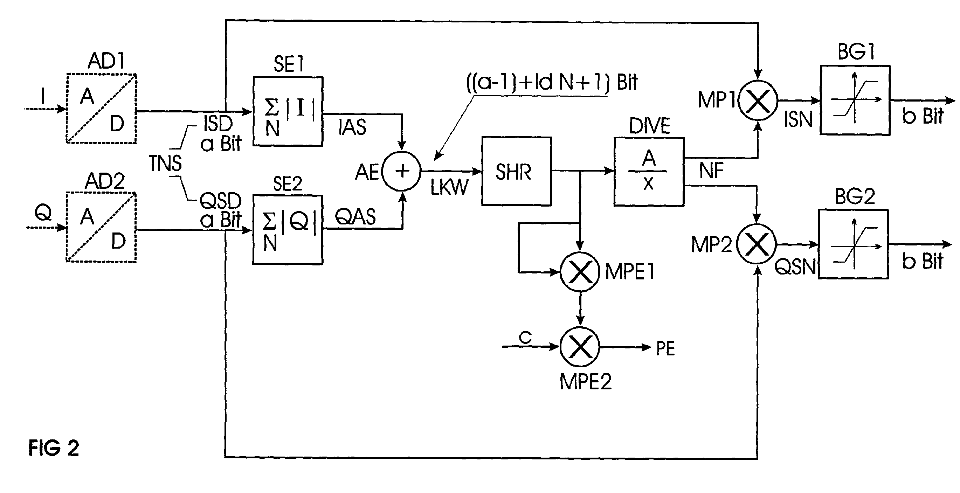

FIG 2 zeigt ein Signalflussdiagramm zur erfindungsgemäßen Ermittlung und Regelung der Leistung eines Teilnehmersignals TNS.
Vergleichend mit FIG 1 gelangen hier das reale I-Signal ISD und das imaginäre Q-Signal QSD jeweils getrennt an eine erste Summiereinrichtung SE1 bzw. an eine zweite Summiereinrichtung SE2.

Die erste Summiereinrichtung SE1 bildet aus durch Abtastung gewonnenen n Amplituden des digitalen I-Signals ISD über die n Abtastwerte gemittelte Betragsamplituden IAS gemäß der Formel:

$$\frac{1}{N}\sum_{n=1}^{N} |s_i(n)|$$

Analog bildet die zweite Summiereinrichtung SE2 aus durch Abtastung gewonnenen n Amplituden des digitalen Q-Signals QSD über die n Abtastwerte gemittelte Betragsamplituden QAS gemäß der Formel:

$$\frac{1}{N}\sum_{n=1}^{N} |s_q(n)|$$

Mit Hilfe einer Addiereinrichtung AE werden die gemittelten Betragsamplituden IAS und QAS zu einem Leistungskennwert LKW addiert, der als gemittelte Signalamplitude die Leistung des Teilnehmersignals TNS repräsentiert.

Durch die erfindungsgemäßen Additionen wird der Leistungskennwert LKW unter Vermeidung von Multiplikationen ermittelt. Unter der Annahme, dass das I-Signal ISD und das Q-Signal QSD wieder jeweils eine Bitbreite von a Bit aufweisen, ergibt sich für den Leistungskennwert LKW vergleichend mit FIG 1 bei einer reduzierten Bitbreite von (a-1)+ld(N)+1 Bit ein äußerst genauer Wert. Auf eine zusätzliche Reduzierung der Bitbreite des Leistungskennwerts kann verzichtet werden.

In einer bevorzugten Ausführungsform erfolgt zur weiteren Optimierung der Leistungsermittlung und der Leistungsregelung bei hinreichender Genauigkeit eine Reduzierung der Bitbreite des Leistungskennwerts mit Hilfe einer "Shift-Right-Operation" mit Hilfe eines Registers SHR.

Dadurch, dass diese "Shift-Right-Operation" erstmals nach der Addition durch die Addiereinrichtung AE erfolgt, wirkt sie sich, vergleichend mit dem Stand der Technik gemäß FIG 1, wegen des Mittelungseffekts der Addition weniger stark auf die Genauigkeit aus.

Zur Ermittlung der Leistung des Teilnehmersignals wird der Leistungskennwert LKW mit Hilfe einer ersten Multiplikationseinrichtung MPE1 quadriert und mit Hilfe einer zweiten Multiplikationseinrichtung MPE2 mit einem prozessspezifischen Faktor C multipliziert und damit die gemittelte Signalleistung PE errechnet.

Unter der Annahme, dass es sich um ein komplexes Teilnehmersignal TNS mit gaußverteilten Signalen ISD und QSD handelt, liegt der prozessspezifische Faktor c bei $\pi/4$.

Zusammenfassend ergibt sich eine geschätzte Standardabweichung $\sigma_s^2$ entsprechend dem Erwartungswert E der gemittelten Signalleistung PE gemäß der Formel:

$$\sigma_s^2 = c * E\left\{\left(\frac{1}{N}\sum_{n=1}^{N}\left|s_i(n)\right| + \left|s_q(n)\right|\right)^2\right\}$$

Zur Regelung der Leistung gelangt der Leistungskennwert LKW als Eingangssignal x an eine Divisionseinrichtung DIVE. Mit deren Hilfe wird als genormte Amplitude ein Normierungsfaktor NF durch Division eines variierbaren Faktors A mit dem Eingangssignal x ermittelt.

Der Normierungsfaktors NF wird jeweils mit dem I-Signal ISD und mit dem Q-Signals QSD multipliziert, wodurch eine indirekte Leistungsregelung des Teilnehmersignals erfolgt. Es entsteht ein reales normiertes Amplitudensignal ISN und ein imaginäres normiertes Amplitudensignal QSN, die zur weiteren Verarbeitung getrennt an ihnen jeweils zugeordnete Begrenzer BG1 bzw. BG2 gelangen.

Der Faktor A der Divisionseinrichtung DIVE wird wieder so variiert, dass der jeweilige Begrenzer BG1 bzw. BG2 maximal ausgesteuert wird. Die Begrenzer BG1 und BG2 dienen wiederum zur Reduzierung der durch die Rechenoperationen des Divisors DIVE und der Multiplikatoren systembedingt erfolgten Erhöhung der Bitbreiten der normierten Amplitudensignale ISN bzw. QSN auf beispielsweise b Bit.

Durch die Berechnung des Normierungsfaktors NF unter Vermeidung eines Algorithmus zur Wurzelberechnung entstehen bezüglich ihrer Genauigkeit bitbreitenoptimierte normierte Amplitudensignale ISN bzw. QSN, die auch nach erfolgter Bitbreitenreduzierung durch den jeweiligen Begrenzer BG1 bzw. BG2 vergleichend mit dem in FIG 1 dargestellten Verfahren genauer sind.

Bei einer von der Gaußverteilung abweichenden, anderen bekannten Verteilung des realen I-Signal ISD und des imaginären Q-Signals QSD wird der prozessspezifische Faktor c jeweils entsprechend der bekannten Verteilung angepasst. Dafür wird beispielsweise eine Tabelle verwendet, in der der prozessspezifische Faktor c abhängig von der Wahrscheinlichkeitsverteilung der Eingangssignale eingetragen ist.

Durch das erfindungsgemäße Verfahren ist es auch möglich, nur eines der beiden digitalen Signale ISD bzw. QSD auszuwerten und den Leistungskennwert LKW alleine daraus herzuleiten. Dabei ist ein Kompromiss zu schließen zwischen Vergrößerung der Schätzvarianz einerseits und einer geforderten Systemgenauigkeit andererseits.

Es sei noch darauf hingewiesen, dass das erfindungsgemäße Verfahren auch zur Anwendung kommt bei rein realen Teilnehmersignalen, die eine Sonderform eines komplexen Teilnehmersignals darstellen.

Durch das erfindungsgemäße Verfahren erfolgen die jeweiligen Multiplikationen mit einer geringeren Taktrate bei einer vergrößerten Genauigkeit oder wahlweise durch Einsatz des Registers SHR mit reduzierter Bitbreite. Die durch die Bitbreitenreduzierung ("Clipping") verursachten Fehler bei den Begrenzern werden vergleichend zum Stand der Technik verringert.

**Patentansprüche**

1. Verfahren zur Ermittlung und Regelung der Leistung (PE) eines digitalen komplexen Teilnehmersignals (TNS), das ein reales I-Signal (ISD) und ein imaginäres Q-Signal (QSD) aufweist, mit Hilfe eines Leistungskennwerts (LKW), **dadurch gekennzeichnet, dass** der Leistungskennwert (LKW) mit Hilfe von gemittelten Betragsamplituden (IAS,QAS) des I-Signals (ISD) und des Q-Signals (QSD) gebildet werden, und dass zur Mittelung N Abtastwerte des Teilnehmersignals (TNS) verwendet werden.

2. Verfahren nach Anspruch 1, **dadurch gekennzeichnet, dass** zur Berechnung der digitalen realen gemittelten Betragsamplitude (IAS) insgesamt N durch Abtastung gewonnene Amplituden des I-Signals (ISD) dem Betrage nach digital aufsummiert und zur Mittelung durch N dividiert werden (SE1).

**3.** Verfahren nach Anspruch 1, **dadurch gekennzeichnet, dass** zur Berechnung der digitalen imaginären Betragsamplitude (QAS) insgesamt N durch Abtastung gewonnene Amplituden des Q-Signals (QSD) dem Betrage nach digital aufsummiert und zur Mittelung durch N dividiert werden (SE2).

**4.** Verfahren nach Anspruch 2 und 3, **dadurch gekennzeichnet, dass** der Leistungskennwert (LKW) durch Addition (AE) der realen Betragsamplituden (IAS) des I-Signals (ISD) und der imaginären Betragsamplitude (QAS) des Q-Signals (QSD) gebildet wird.

**5.** Verfahren nach Anspruch 4, **dadurch gekennzeichnet, dass** der Leistungskennwert (LKW) in seiner Bitbreite mit Hilfe einer Shift-Right-Operation reduziert wird.

**6.** Verfahren nach Anspruch 4 oder 5, **dadurch gekennzeichnet, dass** zur Ermittlung der Leistung (PE) des Teilnehmersignals (TNS) der Leistungskennwert (LKW) mittels einer ersten Multiplikation (MPE1) quadriert und mittels einer zweiten Multiplikation (MPE2) mit einem prozessspezifischen Faktor (c) multipliziert wird, der abhängig von einer bekannten Wahrscheinlichkeitsverteilung des realen I-Signals (ISD) und des imaginären Q-Signals (QSD) ist.

**7.** Verfahren nach Anspruch 4 oder 5, **dadurch gekennzeichnet, dass** zur Regelung der Leistung des Teilnehmersignals (TNS) ein Normierungsfaktor (NF) durch Division (DIVE) eines variierbaren Faktors (A) mit einem den Leistungskennwert (LKW) darstellenden Eingangswerts (x) ermittelt wird und der Normierungsfaktor (NF) jeweils mit dem digitalen I-Signal (ISD) bzw. mit dem digitalen Q-Signal (QSD) multipliziert wird, wodurch ein normiertes reales Amplitudensignal (ISN) bzw. ein normiertes imaginäres Amplitudensignal (QSN) erzeugt wird.

**8.** Verfahren nach Anspruch 7, **dadurch gekennzeichnet, dass** die normierten Amplitudensignale (ISN,QSN) jeweils in ihrer Bitbreite reduziert werden.

**9.** Verfahren nach einem der vorhergehenden Ansprüche, **dadurch gekennzeichnet, dass** dem realen I-Signal (ISD) oder dem imaginären Q-Signal (QSD) stets als Wert Null zugewiesen wird, wodurch der Leitungskennwert (LKW) ausschließlich aus der gemittelten Betragsamplitude (IAS,QAS) des verbleibenden Q-Signals (QSD) oder des I-Signals (ISD) ermittelt wird.

**10.** Anordnung zur Ermittlung und Regelung der Leistung (PE) eines digitalen komplexen Teilnehmersignals (TNS), das ein reales I-Signal (ISD) und ein imaginäres Q-Signal (QSD) aufweist, mit Hilfe eines Leistungskennwerts (LKW), **dadurch gekennzeichnet,**
**dass** zur Ermittlung des Leistungskennwerts (LKW) das reale I-Signal (ISD) an eine erste Summiereinrichtung (SE1) und das imaginäre Q-Signal (QSD) an eine zweite Summiereinrichtung (SE2) geschaltet sind, wobei die Summiereinrichtungen (SE1,SE2) aus jeweils N durch Abtastung gewonnenen Amplituden des jeweiligen Signals (ISD, QSD), die dem Betrage nach digital aufsummiert und zur Mittelung durch N dividiert werden, eine reale und eine imaginäre gemittelte Betragsamplitude (IAS,QAS) errechnen.

**11.** Anordnung nach Anspruch 10, **dadurch gekennzeichnet, dass** die gemittelten Betragsamplituden (IAS,QAS) an eine Additionseinrichtung (AE) angeschaltet sind, die durch Addition der beiden gemittelten Betragsamplituden (IAS,QAS) den Leistungskennwert ermittelt.

**12.** Anordnung nach Anspruch 11, **dadurch gekennzeichnet, dass** der Leistungskennwert (LKW) an ein Register angeschaltet ist, das den Leistungskennwert mit Hilfe einer Shift-Right-Operation in seiner Bitbreite reduziert.

**13.** Anordnung nach Anspruch 11 oder 12, **dadurch gekennzeichnet, dass** zur Ermittlung der Leistung (PE) des Teilnehmersignals (TNS) der Leistungskennwert (LKW) zur Quadrierung an eine erste Multiplikationseinrichtung (MPE1) angeschaltet ist und der quadrierte Leistungskennwert (LKW) zur Multiplikation mit einem prozessspezifischen Faktor (c) an eine zweite Multiplikationseinrichtung (MPE2) angeschaltet ist, wobei der prozessspezifische Faktor (c) abhängig von einer bekannten Wahrscheinlichkeitsverteilung des I-Signals (ISD) und des Q-Signals (QSD) vorbelegt ist.

**14.** Anordnung nach Anspruch 11 oder 12, **dadurch gekennzeichnet,**

- **dass** zur Regelung der Leistung des Teilnehmersignals (TNS) der Leistungskennwert (LKW) an eine Divisionseinrichtung (DIVE) angeschaltet ist, mit deren Hilfe ein Normierungsfaktor (NF) durch Division eines variierbaren Faktors (A) mit einem den Leistungskennwert (LKW) darstellenden Eingangswert (x) ermittelt wird, und
- **dass** der Normierungsfaktor NF jeweils an einen ersten Multiplizierer (MP1) und an einen zweiten Multiplizierer (MP2) angeschaltet ist, mit deren Hilfe der Normierungsfaktor (NF) jeweils mit dem digitalen I-Signal (ISD) bzw. mit dem digitalen Q-Signal (QSD) zur Bildung eines normierten realen Amplitudensignals (ISN) bzw. eines normierten imaginären Amplitudensignals (QSN) multipliziert wird.

15. Anordnung nach Anspruch 14, **dadurch gekennzeichnet, dass** die normierten Amplitudensignale (ISN,QSN) zur Reduzierung ihrer Bitbreite jeweils an einen Begrenzer (BG1,BG2) geschaltet sind.

FIG 1

FIG 2

**Europäisches Patentamt**

# EUROPÄISCHER RECHERCHENBERICHT

Nummer der Anmeldung

EP 01 12 7757

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 459 339 A (ALCATEL RADIOTELEPHONE) 4. Dezember 1991 (1991-12-04) | 1-3,10 | H04B17/00 |
| A | * Seite 3, Zeile 1-3 * | 4-9, 11-15 | |
| | * Seite 5, Zeile 37 - Seite 6, Zeile 13 * * Seite 6, Zeile 43-49 * | | |
| | --- | | |
| X | WO 95 30275 A (QUALCOMM INC) 9. November 1995 (1995-11-09) | 1-3,10 | |
| A | * Zusammenfassung * | 4-9, 11-15 | |
| | * Seite 14, Zeile 27 - Seite 15, Zeile 11 * * Abbildung 7 * | | |
| | --- | | |
| A | EP 0 622 893 A (FORD MOTOR CO) 2. November 1994 (1994-11-02) * Seite 6, Zeile 23-30 * * Abbildung 4A * | 1-15 | |
| | ----- | | |

**RECHERCHIERTE SACHGEBIETE (Int.Cl.7)**

H04B
H03D
H04L

Der vorliegende Recherchenbericht wurde für alle Patentansprüche erstellt

| Recherchenort | Abschlußdatum der Recherche | Prüfer |
|---|---|---|
| MÜNCHEN | 22. März 2002 | Helms, J |

**ANHANG ZUM EUROPÄISCHEN RECHERCHENBERICHT**
**ÜBER DIE EUROPÄISCHE PATENTANMELDUNG NR.**            EP 01 12 7757

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-03-2002

| Im Recherchenbericht angeführtes Patentdokument | | Datum der Veröffentlichung | Mitglied(er) der Patentfamilie | | Datum der Veröffentlichung |
|---|---|---|---|---|---|
| EP 0459339 | A | 04-12-1991 | FR | 2662806 A1 | 06-12-1991 |
| | | | AT | 119728 T | 15-03-1995 |
| | | | DE | 69107894 D1 | 13-04-1995 |
| | | | DE | 69107894 T2 | 13-07-1995 |
| | | | DK | 459339 T3 | 24-07-1995 |
| | | | EP | 0459339 A1 | 04-12-1991 |
| | | | ES | 2071161 T3 | 16-06-1995 |
| | | | FI | 912583 A | 01-12-1991 |
| | | | NO | 303899 B1 | 14-09-1998 |
| WO 9530275 | A | 09-11-1995 | AT | 164974 T | 15-04-1998 |
| | | | AU | 694514 B2 | 23-07-1998 |
| | | | AU | 2398995 A | 29-11-1995 |
| | | | BR | 9506205 A | 23-04-1996 |
| | | | CA | 2163883 A1 | 09-11-1995 |
| | | | CN | 1128091 A ,B | 31-07-1996 |
| | | | DE | 69501996 D1 | 14-05-1998 |
| | | | DE | 69501996 T2 | 15-10-1998 |
| | | | DK | 706730 T3 | 08-02-1999 |
| | | | EP | 0706730 A1 | 17-04-1996 |
| | | | ES | 2115380 T3 | 16-06-1998 |
| | | | FI | 956286 A | 26-02-1996 |
| | | | HK | 1005920 A1 | 29-01-1999 |
| | | | IL | 113479 A | 14-07-1999 |
| | | | JP | 3021662 B2 | 15-03-2000 |
| | | | JP | 8510892 T | 12-11-1996 |
| | | | RU | 2156538 C2 | 20-09-2000 |
| | | | SI | 706730 T1 | 31-12-1998 |
| | | | WO | 9530275 A1 | 09-11-1995 |
| | | | US | 5617060 A | 01-04-1997 |
| | | | ZA | 9500605 A | 20-12-1995 |
| EP 0622893 | A | 02-11-1994 | US | 5414735 A | 09-05-1995 |
| | | | DE | 69415207 D1 | 28-01-1999 |
| | | | DE | 69415207 T2 | 20-05-1999 |
| | | | EP | 0622893 A1 | 02-11-1994 |
| | | | JP | 7006159 A | 10-01-1995 |

EPO FORM P0461

Für nähere Einzelheiten zu diesem Anhang : siehe Amtsblatt des Europäischen Patentamts, Nr. 12/82